# EUROPEAN PATENT APPLICATION

(11) **EP 4 810 942 A1**
(43) Date of publication of application: **23.09.2026**
(21) Application number: 24891302.2
(22) Date of filing: 06.11.2024
(51) Int. Cl.: G01N 21/88, G03B 15/00, G06T 19/00, H04N 7/18, H04N 23/90

(54) **WORKPIECE INSPECTION CAMERA, WORKPIECE INSPECTION LIGHTING APPARATUS, SYSTEM FOR ASSISTING DETERMINATION OF ARRANGEMENT OF SAME, METHOD FOR CONTROLLING SYSTEM, AND PROGRAM FOR CONTROLLING SYSTEM**

(30) Priority: 17.11.2023 JP 2023195955
(71) Applicant: OMRON Corporation, Kyoto-shi, Kyoto 600-8530 (JP)
(72) Inventor: IWAMURA, Shintaro, Kyoto-shi, Kyoto 600-8530 (JP); HASEGAWA, Naoto, Kyoto-shi, Kyoto 600-8530 (JP); OHNUKI, Haruna, Kyoto-shi, Kyoto 600-8530 (JP)
(74) Representative: Mewburn Ellis LLP
(86) International application number: PCT/JP2024/039445
(87) International publication number: WO 2025/105264

(57) **Abstract**

The present disclosure assists in determining a camera, a lighting apparatus and an arrangement thereof suitable for inspection of a workpiece by evaluating an image of the workpiece captured in a virtual space. A system (10) includes: a storage unit; an input unit; and a processor. The processor is configured to: select one or more candidate cameras as candidates for an inspection camera from among a plurality of cameras based on one or more selection criteria about the arrangement; select one or more candidate lighting apparatuses as candidates for an inspection lighting apparatus from among a plurality of lighting apparatuses based on the one or more selection criteria; select a camera from among the one or more candidate cameras; select a lighting apparatus from among the one or more candidate lighting apparatuses; capture images of the workpiece in a virtual space a plurality of times while changing at least a part of a position of the selected camera, a posture of the selected camera, a position of the selected lighting apparatus, and a posture of the selected lighting apparatus; analyze the plurality of images obtained by image capturing; and output evaluation information for each of a plurality of combinations of the selected camera, the position and posture of the selected camera, the selected lighting apparatus, and the position and posture of the selected lighting apparatus based on an analysis result.

## Description

### TECHNICAL FIELD

The present disclosure relates to a system for assisting in determining an inspection camera for a workpiece, an inspection lighting apparatus for the workpiece, and an arrangement thereof.

### BACKGROUND ART

In a production line or the like, a camera and a lighting apparatus are used for inspection of a workpiece. There are various types of cameras and lighting apparatuses. Further, appropriate positions and postures of the camera and the lighting apparatus vary depending on the surrounding environment, the shape or size of the workpiece, and the like. Therefore, a person in charge of designing a production line or the like needs to select a combination of a camera and a lighting apparatus suitable for inspection of a workpiece in advance. Furthermore, the person in charge of designing the production line needs to adjust the position and posture of the selected camera and lighting apparatus. These tasks require many man-hours. Therefore, a technique for making these tasks more efficient is desired. As one of such techniques, there is a technique for moving a camera in a virtual space.

As to the technique for moving a camera in a virtual space, for example, WO2021/070226 (PTL 1) discloses a virtual camera control device including: "a gaze point determination unit that determines any one point of a tour object or a viewing object as a gaze point, the tour object or the viewing object being both virtual 3D objects arranged in a virtual 3D space; and a virtual camera tour unit that moves a virtual camera arranged in the virtual 3D space for taking a picture of the inside of the virtual 3D space while keeping a direction in which the virtual camera takes the picture in a direction from the virtual camera toward the gaze point determined by the gaze point determination unit and keeping a distance from the virtual camera to the tour object at a constant distance" (see paragraph [0007]).

### CITATION LIST

### PATENT LITERATURE

PTL 1: WO2021/070226

### SUMMARY OF INVENTION

### TECHNICAL PROBLEM

According to the technique disclosed in PTL 1, it may be possible to move a camera in a virtual space. However, with the technique disclosed in PTL 1, it is not possible to evaluate an image of a workpiece captured by using a camera and a lighting apparatus in a virtual space. Therefore, a designer of a production line or the like cannot determine a camera, a lighting apparatus and an arrangement thereof suitable for inspection of a workpiece even if the technique disclosed in PTL 1 is used. Accordingly, there is a need for a technique for assisting in determining a camera, a lighting apparatus and an arrangement thereof suitable for inspection of a workpiece by evaluating an image of the workpiece captured in a virtual space.

The present disclosure has been made in view of the background as described above, and an object in one aspect is to provide a technique for assisting in determining a camera, a lighting apparatus and an arrangement thereof suitable for inspection of a workpiece by evaluating an image of the workpiece captured in a virtual space.

### SOLUTION TO PROBLEM

According to one embodiment, a system for assisting in determining an inspection camera for a workpiece, an inspection lighting apparatus for the workpiece, and an arrangement thereof is provided. The system includes: a storage unit configured to store information about a plurality of cameras and a plurality of lighting apparatuses; an input unit configured to receive input of one or more selection criteria about the arrangement; and a processor. The processor is configured to: select one or more candidate cameras as candidates for the inspection camera from among the plurality of cameras based on the one or more selection criteria; select one or more candidate lighting apparatuses as candidates for the inspection lighting apparatus from among the plurality of lighting apparatuses based on the one or more selection criteria; select a camera from among the one or more candidate cameras; select a lighting apparatus from among the one or more candidate lighting apparatuses; capture images of the workpiece in a virtual space a plurality of times while changing at least a part of a position of the selected camera, a posture of the selected camera, a position of the selected lighting apparatus, and a posture of the selected lighting apparatus; analyze the plurality of images obtained by image capturing; and output evaluation information for each of a plurality of combinations of the selected camera, the position and posture of the selected camera, the selected lighting apparatus, and the position and posture of the selected lighting apparatus based on an analysis result.

According to the above disclosure, by using the system, a user (line designer, etc.) can significantly reduce man-hours required to select a camera and a lighting apparatus and determine positions and postures thereof. That is, the user (line designer, etc.) can significantly reduce design man-hours for an inspection jig.

In one aspect, the processor is configured to repeatedly perform the capturing images of the workpiece a plurality of times and the analyzing the plurality of images obtained by image capturing for the number of combinations of the one or more candidate cameras and the one or more candidate lighting apparatuses.

According to the above disclosure, the system can perform evaluations for all of the combinations of the one or more candidate cameras and the one or more candidate lighting apparatuses.

In one aspect, the one or more selection criteria include a part or all of a purpose of use of the inspection camera and the inspection lighting apparatus, an environmental resistance setting, a budget, a delivery date, an image capturing time of the inspection camera, an image capturing distance, monochrome/color, a hue, a saturation and a brightness of the inspection lighting apparatus, and shape information of the workpiece.

According to the above disclosure, the system can select the one or more candidate cameras and the one or more candidate lighting apparatuses that satisfy a user's request, based on the one or more selection criteria.

In one aspect, the processor is configured to limit a setting range of a part of the position and posture of the selected camera based on a selection criterion about the inspection camera included in the one or more selection criteria.

According to the above disclosure, the system can limit the setting range of a part of the position and posture of the selected camera based on the selection criterion about the inspection camera. Accordingly, the system can output the evaluation information at a higher speed.

In one aspect, the processor is configured to limit a setting range of a part of the position and posture of the selected lighting apparatus based on a selection criterion about the inspection lighting apparatus included in the one or more selection criteria.

According to the above disclosure, the system can limit the setting range of a part of the position and posture of the selected lighting apparatus based on the selection criterion about the inspection lighting apparatus. Accordingly, the system can output the evaluation information at a higher speed.

In one aspect, the evaluation information includes a model number, a position and a posture of a camera used for capturing images of the workpiece, a model number, a position and a posture of a lighting apparatus used for capturing images of the workpiece, an evaluation value of the analysis result, and the captured images.

According to the above disclosure, the system can present, to the user, the model number, the position and the posture of the camera used for capturing images of the workpiece, the model number, the position and the posture of the lighting apparatus used for capturing images of the workpiece, the evaluation value of the analysis result, and the captured images in association with each other.

In one aspect, the capturing images of the workpiece in a virtual space includes capturing images of each of a plurality of workpieces. The evaluation information includes comprehensive evaluation information when the images of each of the plurality of workpieces are captured, for each of the plurality of combinations of the selected camera, the position and posture of the selected camera, the selected lighting apparatus, and the position and posture of the selected lighting apparatus.

According to the above disclosure, the system can present, to the user, the comprehensive evaluation information of the camera and the lighting apparatus to be used for a plurality of inspection jigs.

In one aspect, the system further includes a communication unit configured to communicate with a shop server. The input unit is configured to receive, from a user, input of order information of at least one of the camera and the lighting apparatus included in the evaluation information. The communication unit is configured to transmit the order information to the shop server based on the input of the order information.

According to the above disclosure, the system can transmit the order information to the shop server based on receiving an order input from the user. Accordingly, the user can easily obtain the camera and the lighting apparatus.

According to another embodiment, a control method for a system for assisting in determining an inspection camera for a workpiece, an inspection lighting apparatus for the workpiece, and an arrangement thereof is provided. The control method includes: receiving input of one or more selection criteria about the arrangement; selecting one or more candidate cameras as candidates for the inspection camera from among a plurality of cameras based on the one or more selection criteria; selecting one or more candidate lighting apparatuses as candidates for the inspection lighting apparatus from among a plurality of lighting apparatuses based on the one or more selection criteria; selecting a camera from among the one or more candidate cameras; selecting a lighting apparatus from among the one or more candidate lighting apparatuses; capturing images of the workpiece in a virtual space a plurality of times while changing at least a part of a position of the selected camera, a posture of the selected camera, a position of the selected lighting apparatus, and a posture of the selected lighting apparatus; analyzing the plurality of images obtained by image capturing; and outputting evaluation information for each of a plurality of combinations of the selected camera, the position and posture of the selected camera, the selected lighting apparatus, and the position and posture of the selected lighting apparatus based on an analysis result.

According to the above disclosure, by using the system, a user (line designer, etc.) can significantly reduce man-hours required to select a camera and a lighting apparatus and determine positions and postures thereof. That is, the user (line designer, etc.) can significantly reduce design man-hours for an inspection jig.

Furthermore, according to another embodiment, a control program for a system for assisting in determining an inspection camera for a workpiece, an inspection lighting apparatus for the workpiece, and an arrangement thereof is provided. The control program causes the system to perform: receiving input of one or more selection criteria about the arrangement; selecting one or more candidate cameras as candidates for the inspection camera from among a plurality of cameras based on the one or more selection criteria; selecting one or more candidate lighting apparatuses as candidates for the inspection lighting apparatus from among a plurality of lighting apparatuses based on the one or more selection criteria; selecting a camera from among the one or more candidate cameras; selecting a lighting apparatus from among the one or more candidate lighting apparatuses; capturing images of the workpiece in a virtual space a plurality of times while changing at least a part of a position of the selected camera, a posture of the selected camera, a position of the selected lighting apparatus, and a posture of the selected lighting apparatus; analyzing the plurality of images obtained by image capturing; and outputting evaluation information for each of a plurality of combinations of the selected camera, the position and posture of the selected camera, the selected lighting apparatus, and the position and posture of the selected lighting apparatus based on an analysis result.

According to the above disclosure, by using the system, a user (line designer, etc.) can significantly reduce man-hours required to select a camera and a lighting apparatus and determine positions and postures thereof. That is, the user (line designer, etc.) can significantly reduce design man-hours for an inspection jig.

### ADVANTAGEOUS EFFECTS OF INVENTION

According to one embodiment, it is possible to assist in determining a camera, a lighting apparatus and an arrangement thereof suitable for inspection of a workpiece by evaluating an image of the workpiece captured in a virtual space.

The foregoing and other objects, features, aspects and advantages of the present disclosure will become more apparent from the following detailed description of the present disclosure when taken in conjunction with the accompanying drawings.

### BRIEF DESCRIPTION OF DRAWINGS

Fig. 1 is a diagram showing an example of an operation overview of a system 10 according to the present embodiment.
Fig. 2 is a diagram showing a first example of a configuration of system 10.
Fig. 3 is a diagram showing a second example of the configuration of system 10.
Fig. 4 is a diagram showing an example of a series of setting screens for one or more selection criteria.
Fig. 5 is a diagram showing an example of setting items for a camera and a lighting apparatus that can be set on each screen shown in Fig. 4.
Fig. 6 is a diagram showing an example of a setting screen for a position and a posture of the camera.
Fig. 7 is a diagram showing an example of a setting screen for a position and a posture of the lighting apparatus.
Fig. 8 is a diagram showing an example of a setting screen for other items of the lighting apparatus.
Fig. 9 is a diagram showing an example of a setting screen for an inspection tool.
Fig. 10 is a diagram showing an example of a selection screen for one or more candidate cameras.
Fig. 11 is a diagram showing an example of a selection screen for one or more candidate lighting apparatuses.
Fig. 12 is a diagram showing an example of a display screen for evaluation information for each image capturing setting.
Fig. 13 is a diagram showing an example of an overall process procedure of system 10.
Fig. 14 is a diagram showing an example of details of processing for receiving various settings, which is performed by system 10.

### DESCRIPTION OF EMBODIMENTS

Embodiments of a technical idea according to the present disclosure will be described hereinafter with reference to the drawings. In the following description, the same components are denoted by the same reference characters. Their names and functions are also the same. Therefore, a detailed description thereof will not be repeated. Further, each embodiment, each modification, each software configuration, each hardware configuration, each function, each process, and the like may be selectively combined as appropriate.

### <A. Application Example>

### (a. Overview of System)

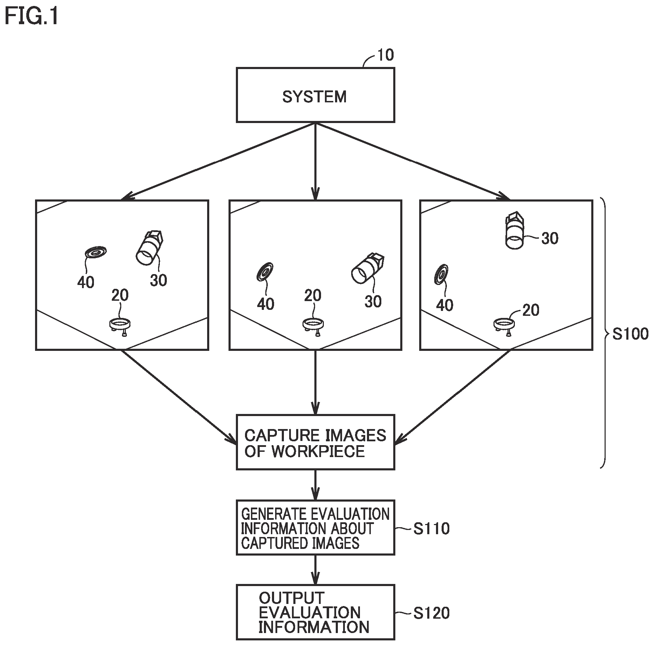

Fig. 1 is a diagram showing an example of an operation overview of a system 10 according to the present embodiment. Many factory lines include an inspection jig for a product. The inspection jig includes an inspection camera and an inspection lighting apparatus. Using the inspection camera, the inspection jig captures an image of a workpiece illuminated by the inspection lighting apparatus. The image obtained by the image capturing is inspected by an inspection tool such as software. The inspection tool can, for example, discover a scratch on a surface of the workpiece.

There is a wide variety of lineups of inspection cameras and inspection lighting apparatuses. Therefore, a line designer needs to find an optimal combination from an enormous number of combinations of inspection cameras and inspection lighting apparatuses. Furthermore, an obtained inspection result also varies depending on positions and postures of the inspection camera and the inspection lighting apparatus. Therefore, for each combination of the camera and the lighting apparatus, the line designer also needs to consider the positions and postures thereof (design of the inspection jig). The task for selecting an inspection camera and an inspection lighting apparatus and determining the positions and postures of the inspection camera and the inspection lighting apparatus was a very burdensome task for the designer.

Thus, system 10 according to the present embodiment provides a function of selecting an inspection camera and an inspection lighting apparatus only by receiving input of one or more selection criteria from a user. Further, system 10 provides a function of proposing positions and postures of the inspection camera and the inspection lighting apparatus.

More specifically, first, in step S100, system 10 selects one or more candidate cameras from among a plurality of cameras registered in system 10, based on the received one or more selection criteria. Similarly, system 10 selects one or more candidate lighting apparatuses from among a plurality of lighting apparatuses registered in system 10, based on the received one or more selection criteria. Selecting one or more candidate cameras means selecting model numbers of one or more candidate cameras. Selecting one or more candidate lighting apparatuses means selecting model numbers of one or more candidate lighting apparatuses.

Next, system 10 captures an image of a workpiece 20 in a virtual space using a camera 30 selected from among the one or more candidate cameras and a lighting apparatus 40 selected from among the one or more candidate lighting apparatuses. At that time, system 10 captures images of workpiece 20 in the virtual space a plurality of times while changing at least one of a position of camera 30, a posture of camera 30, a position of lighting apparatus 40, and a posture of lighting apparatus 40.

Hereinafter, a combination of the model number of the camera, the position of the camera, the posture of the camera, the model number of the lighting apparatus, the position of the lighting apparatus, and the posture of the lighting apparatus may be referred to as "image capturing setting". System 10 repeatedly captures images of the workpiece while changing some items of the image capturing setting. That is, as described above, system 10 repeatedly captures images of the workpiece while changing at least one of the position of camera 30, the posture of camera 30, the position of lighting apparatus 40, and the posture of lighting apparatus 40. System 10 can capture images of workpiece 20 any number of times while changing the positions and postures of camera 30 and lighting apparatus 40. Selecting camera 30 from among the one or more candidate cameras means selecting the model number of camera 30. Selecting lighting apparatus 40 from among the one or more candidate lighting apparatuses means selecting the model number of lighting apparatus 40.

Next, in step S110, system 10 generates evaluation information about the captured images. The evaluation information is associated with a combination of the model number of camera 30, the position of camera 30, the posture of camera 30, the model number of lighting apparatus 40, the position of lighting apparatus 40, and the posture of lighting apparatus 40. As an example, system 10 can inspect the images of workpiece 20 using an existing inspection tool (software, etc.). The evaluation information can include an evaluation of how accurately the existing inspection tool could detect an abnormality or a feature of the workpiece.

Finally, in step S120, system 10 outputs the evaluation information. The evaluation information is generated for the number of image capturing settings. As an example, it is assumed that the number of the one or more candidate cameras is ten, and the number of the one or more candidate lighting apparatuses is ten. Further, it is assumed that the number of combinations of the position and posture of each camera is one hundred. Further, it is assumed that the number of combinations of the position and posture of each lighting apparatus is one hundred. In this case, the number of image capturing settings and the number of pieces of evaluation information are "(number of one or more candidate cameras * number of combinations of position and posture) * (number of one or more candidate lighting apparatuses * number of combinations of position and posture) = (10 * 100) * (10 * 100) = 1,000,000".

As described above, the evaluation information is associated with the combination of the model number of camera 30, the position of camera 30, the posture of camera 30, the model number of lighting apparatus 40, the position of lighting apparatus 40, and the posture of lighting apparatus 40. Therefore, the line designer can obtain an optimal combination of the inspection camera and the inspection lighting apparatus only by selecting camera 30 and lighting apparatus 40 associated with the evaluation information having the best result. Further, the line designer can design the inspection jig based on the position and posture of camera 30 and the position and posture of lighting apparatus 40 that are associated with the evaluation information having the best result.

As described above, system 10 selects the candidates for the inspection camera and the candidates for the inspection lighting apparatus based on the one or more selection criteria. Further, system 10 captures images of the workpiece in the virtual space while changing the positions and postures of the inspection camera and the inspection lighting apparatus for each combination of the inspection camera and the inspection lighting apparatus. Further, system 10 inspects the images of the workpiece using the existing inspection tool. Then, system 10 generates the evaluation information for the inspection result. The line designer can select the inspection camera and the inspection lighting apparatus and determine the positions and postures thereof (design of the inspection jig) only by inputting the one or more selection criteria to system 10 and referring to the evaluation information.

### (b. Terminology)

"System" as used herein may be any information processing device such as one or more personal computers, workstations, server devices, tablets, or smartphones. Further, the system may be a combination thereof. According to one embodiment, the system may be used by a user by being connected to input/output devices such as a display and a keyboard. According to another embodiment, the system may provide various functions to a user as a service or a web application via a network. In this case, the user can use the functions of the system via a browser or client software installed in the user's terminal. Furthermore, according to another embodiment, the system may be provided on a cloud environment. Further, when the system is implemented by one device, the system may be read as a device.

"Line" as used herein is a production facility including robots, belt conveyors, sensors, and the like used in a factory or the like. In one aspect, the line includes a line for manufacturing products or components. Further, in another aspect, the line includes a line for inspecting products or components. Further, the line includes a line for conveying or sorting products or components. Furthermore, in another aspect, the line includes a combination thereof.

"Inspection jig" as used herein is a jig for inspecting a workpiece. The inspection jig includes an inspection camera for capturing images of a workpiece and an inspection lighting apparatus for illuminating the workpiece. The inspection jig also includes a frame for fixing the inspection camera and the inspection lighting apparatus. One or more inspection jigs can be placed on the line.

"Inspection camera" as used herein is a camera used for an inspection jig. Further, the inspection camera as used herein includes not only a camera in a real space but also a camera used by system 10 in a virtual space. The inspection camera may be, for example, a CCD (Charge Coupled Device) camera or a CMOS (Complementary Metal Oxide Semiconductor) camera. The inspection camera outputs captured images to an inspection device.

"Inspection lighting apparatus" as used herein is a lighting apparatus used for an inspection jig. Further, the inspection lighting apparatus as used herein includes not only a lighting apparatus in a real space but also a lighting apparatus used by system 10 in a virtual space. The inspection lighting apparatus is, for example, a lighting apparatus including an LED (Light-Emitting Diode).

"One or more candidate cameras" as used herein are a set of inspection cameras selected by system 10 based on one or more selection criteria. Actually, system 10 selects model numbers of one or more candidate cameras based on one or more selection criteria. As an example, it is assumed that 10,000 types of cameras are registered in system 10. Further, it is assumed that system 10 receives input of one or more selection criteria from a user. At that time, it is assumed that the number of cameras satisfying the one or more selection criteria is 200 types. In this case, system 10 selects the 200 types of cameras as the one or more candidate cameras. Then, system 10 evaluates the 200 types of cameras through capturing images of a workpiece in a virtual space.

"One or more candidate lighting apparatuses" as used herein are a set of inspection lighting apparatuses selected by system 10 based on one or more selection criteria. Actually, system 10 selects model numbers of one or more candidate lighting apparatuses based on one or more selection criteria. As an example, it is assumed that 10,000 types of lighting apparatuses are registered in system 10. Further, it is assumed that system 10 receives input of one or more selection criteria from a user. At that time, it is assumed that the number of lighting apparatuses satisfying the one or more selection criteria is 100 types. In this case, system 10 selects the 100 types of lighting apparatuses as the one or more candidate lighting apparatuses. Then, system 10 evaluates the 100 types of lighting apparatuses through capturing images of a workpiece in a virtual space.

"Camera selected from among one or more candidate cameras" as used herein is a camera selected from among the one or more candidate cameras for image capturing in a virtual space. That is, the selected camera is a camera of a certain model number selected from a set of model numbers of the one or more candidate cameras.

"Lighting apparatus selected from among one or more candidate lighting apparatuses" as used herein is a lighting apparatus of a model number selected from among the one or more candidate lighting apparatuses for image capturing in a virtual space. That is, the selected lighting apparatus is a lighting apparatus of a certain model number selected from a set of model numbers of the one or more candidate lighting apparatuses.

As an example, it is assumed that the one or more candidate cameras include a camera A, a camera B, and a camera C. Further, it is assumed that the one or more candidate lighting apparatuses include a lighting apparatus X and a lighting apparatus Y. In this case, first, system 10 selects camera A from among the one or more candidate cameras. Similarly, system 10 selects lighting apparatus X from among the one or more candidate lighting apparatuses. Then, system 10 captures images of a workpiece in a virtual space using a combination of camera A and lighting apparatus X while changing the positions and postures thereof. When image capturing using camera A and lighting apparatus X is completed, system 10 next selects lighting apparatus Y from among the one or more candidate lighting apparatuses. Then, system 10 captures images of the workpiece in the virtual space using a combination of camera A and lighting apparatus Y while changing the positions and postures thereof. When image capturing using camera A and lighting apparatus Y is completed, system 10 further selects camera B from among the one or more candidate cameras. Similarly, system 10 selects lighting apparatus X from among the one or more candidate lighting apparatuses. Then, system 10 captures images of the workpiece in the virtual space using a combination of camera B and lighting apparatus X while changing the positions and postures thereof. In this way, system 10 captures images of the workpiece while changing a combination of a camera selected from among the one or more candidate cameras and a lighting apparatus selected from among the one or more candidate lighting apparatuses.

"Virtual space" as used herein is a 3D (three-dimensional) space. As an example, in the virtual space, an operation of an object, a light source, and the like imitating a real space can be reproduced using a physical arithmetic operation. "Image capturing" as used herein may be capturing of a still image. Further, image capturing may be capturing of a moving image.

"One or more selection criteria" as used herein can include any criteria for selecting an inspection camera and an inspection lighting apparatus. As an example, the one or more selection criteria can include information about a workpiece to be inspected, an inspection content (purpose of use), an inspection tool, a budget, a delivery date, environmental resistance information, and a color/monochrome setting. The one or more selection criteria can also include an image capturing distance, an image capturing time, a range of a position of the inspection camera, and a range of a posture of the inspection camera. The one or more selection criteria can also include a distance from the inspection lighting apparatus to the workpiece, a range of a position of the inspection lighting apparatus, and a range of a posture of the inspection lighting apparatus. Furthermore, the one or more selection criteria can include any setting such as a hue, a saturation and a brightness of the inspection lighting apparatus.

"Position" as used herein indicates coordinates in a three-dimensional space (or a virtual space). As an example, positions of the inspection camera and the inspection lighting apparatus can be expressed as values of X, Y and Z coordinates. "Posture" as used herein indicates an angle in each rotation axis in a three-dimensional space (or a virtual space). As an example, postures of the inspection camera and the inspection lighting apparatus can be expressed as values of yaw, pitch and roll. The position and the posture may be collectively referred to as "arrangement".

"Image capturing setting" as used herein means a combination of a model number of a camera, a position of the camera, a posture of the camera, a model number of a lighting apparatus, a position of the lighting apparatus, and a posture of the lighting apparatus. In one aspect, the image capturing setting may also include a lighting apparatus setting (a hue, a color, a brightness, etc.).

### <B. Configuration of System>

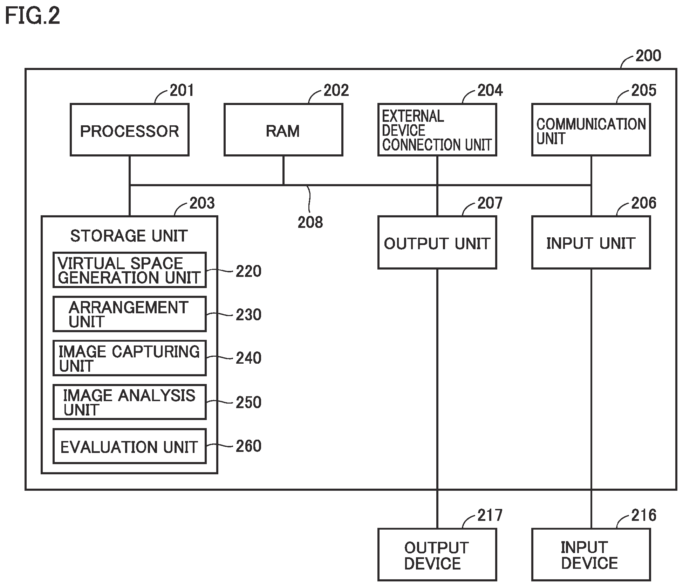

Fig. 2 is a diagram showing a first example of a configuration of system 10. In the example of Fig. 2, system 10 is implemented as one device 200. In one aspect, system 10 can implement a process disclosed herein by executing a program on hardware shown in Fig. 2. Device 200 includes a processor 201, a RAM (Random Access Memory) 202, a storage unit 203, an external device connection unit 204, a communication unit 205, an input unit 206, an output unit 207, and a bus 208. The components of device 200 are configured to be capable of communicating with each other via bus 208.

Processor 201 can execute a program for implementing various functions of device 200. Processor 201 is configured by, for example, at least one integrated circuit. According to one embodiment, the integrated circuit may include at least one CPU (Central Processing Unit), at least one GPU (Graphics Processing Unit), at least one FPGA (Field Programmable Gate Array), at least one ASIC (Application Specific Integrated Circuit), at least one AI (Artificial Intelligence) chip, or a combination thereof.

RAM 202 stores a program to be executed by processor 201 and data to be referred to by processor 201. In one aspect, RAM 202 can be implemented by a DRAM (Dynamic Random Access Memory), an SRAM (Static Random Access Memory), or the like.

Storage unit 203 is a non-volatile memory and stores a program to be executed by processor 201 and data to be referred to by processor 201. Processor 201 executes a program read from storage unit 203 to RAM 202 and refers to data read from storage unit 203 to RAM 202. In one aspect, storage unit 203 can be implemented by an HDD (Hard Disk Drive), an SSD (Solid State Drive), an EPROM (Erasable Programmable Read Only Memory), an EEPROM (Electrically Erasable Programmable Read Only Memory), a flash memory, or the like.

Storage unit 203 stores a virtual space generation unit 220, an arrangement unit 230, an image capturing unit 240, an image analysis unit 250, and an evaluation unit 260. Virtual space generation unit 220, arrangement unit 230, image capturing unit 240, image analysis unit 250, and evaluation unit 260 can be implemented as a program.

Virtual space generation unit 220 generates a virtual space. Virtual space generation unit 220 can also generate a camera, a lighting apparatus, a workpiece, and any other object that are arranged in the virtual space. Further, virtual space generation unit 220 can also perform a physical arithmetic operation in the virtual space.

Arrangement unit 230 determines an arrangement of each object in the virtual space. As an example, arrangement unit 230 determines an arrangement (positions and postures) of a camera and a lighting apparatus in the virtual space. Arrangement unit 230 performs a process for determining the positions and postures of camera 30 and lighting apparatus 40 in Fig. 1. In one aspect, arrangement unit 230 may output an instruction to arrange camera 30 and lighting apparatus 40 to virtual space generation unit 220. In this case, virtual space generation unit 220 arranges camera 30 and lighting apparatus 40 in the virtual space based on the instruction.

Image capturing unit 240 captures images of a workpiece in the virtual space using a camera. In one aspect, image capturing unit 240 may output an instruction for image capturing to virtual space generation unit 220. In this case, virtual space generation unit 220 captures images of the workpiece in the virtual space using the camera and returns the images to image capturing unit 240. Image capturing unit 240 outputs the obtained images to image analysis unit 250. Image capturing unit 240 captures the images of the workpiece every time arrangement unit 230 changes the positions and postures of the camera and the lighting apparatus in the virtual space.

Image analysis unit 250 analyzes one or more obtained images using any inspection tool. Image analysis unit 250 outputs a result of determination of a scratch on a workpiece, a result of extraction of a feature quantity of the workpiece, and the like for each image.

Evaluation unit 260 outputs evaluation information. The evaluation information includes a plurality of evaluation values. The evaluation value is an output value of image analysis unit 250. Each evaluation value is associated with at least the captured images, the model number, the position and the posture of the camera, and the model number, the position and the posture of the lighting apparatus.

External device connection unit 204 can be connected to any external device such as a printer, a scanner, and an external HDD. In one aspect, external device connection unit 204 can be implemented by a USB (Universal Serial Bus) terminal or the like.

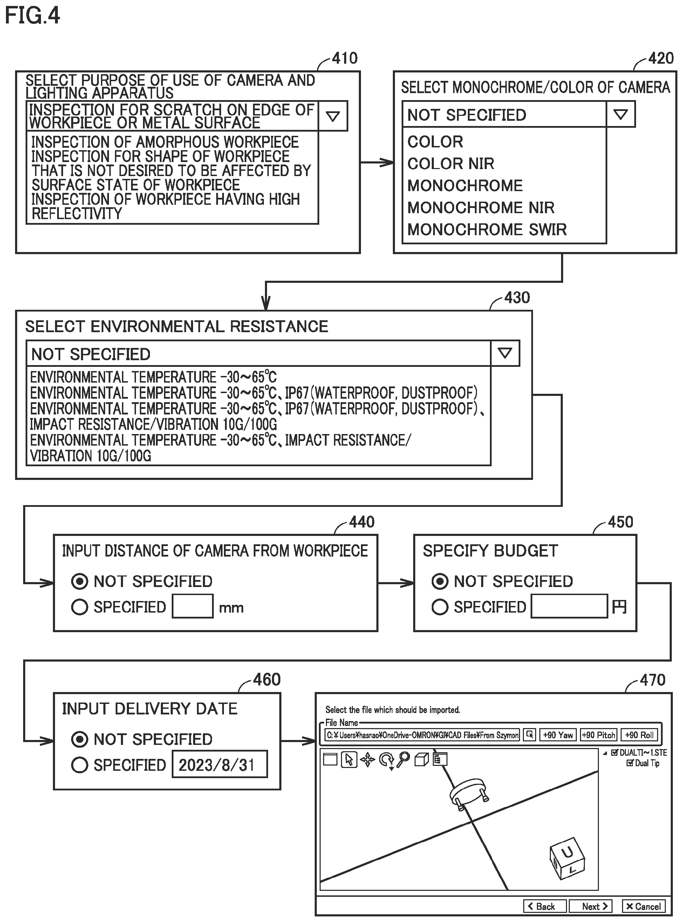

Communication unit 205 is connected to other devices via a wired network or a wireless network. In one aspect, communication unit 205 can be implemented by a wired LAN (Local Area Network) port, a Wi-Fi (Registered Trademark) (Wireless Fidelity) module, or the like. In another aspect, communication unit 205 can transmit and receive data using a communication protocol such as TCP/IP (Transmission Control Protocol/Internet Protocol) and UDP (User Datagram Protocol). Communication unit 205 may transmit various screens shown in Figs. 4 to 12 to other devices.

Input unit 206 can be connected to any input device 216 such as a keyboard, a mouse, a touch pad, or a game pad. In one aspect, input unit 206 can be implemented by a USB terminal, a PS/2 terminal, a Bluetooth (Registered Trademark) module, or the like. In one aspect, input unit 206 may be integrated with input device 216. As an example, input unit 206 can receive input of one or more selection criteria about the arrangement of the inspection camera for the workpiece and the inspection lighting apparatus for the workpiece from the user.

Output unit 207 can be connected to any output device 217 such as a cathode ray tube display, a liquid crystal display, or an organic EL (Electro-Luminescence) display. In one aspect, output unit 207 can be implemented by a USB terminal, a D-sub terminal, a DVI (Digital Visual Interface) terminal, an HDMI (Registered Trademark) (High-Definition Multimedia Interface) terminal, a display port terminal, or the like. In one aspect, output unit 207 may be integrated with output device 217. Various screens shown in Figs. 4 to 12 can be displayed on output device 217.

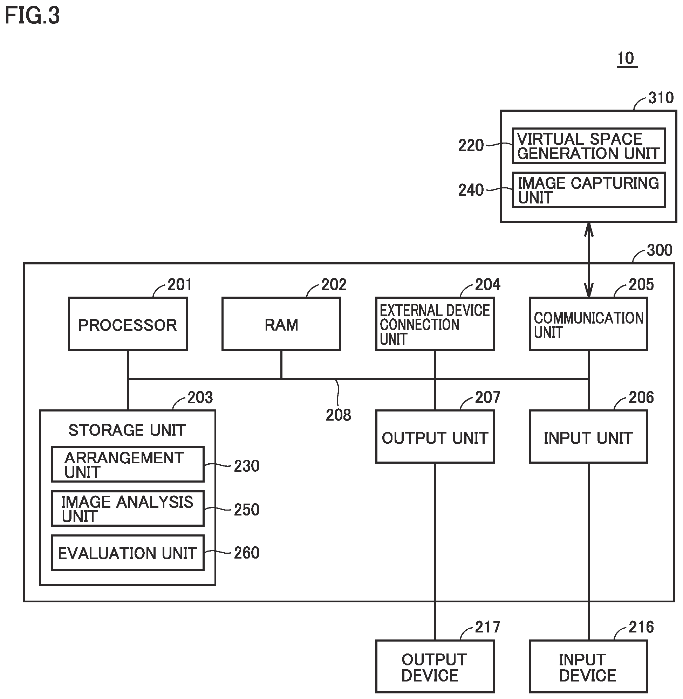

Fig. 3 is a diagram showing a second example of the configuration of system 10. In the example of Fig. 3, system 10 is implemented as two devices 300 and 310. Further, device 300 has the same hardware configuration as that of device 200. Storage unit 203 of device 300 stores arrangement unit 230, image analysis unit 250 and evaluation unit 260. Device 310 stores virtual space generation unit 220 and image capturing unit 240. Device 310 may include a hardware configuration similar to that of device 300.

In the example of Fig. 3, device 300 transmits information about positions and postures of a camera and a lighting apparatus to device 310. Device 300 may transmit one or more pieces of information about the positions and postures to device 310. Device 310 arranges the camera and the lighting apparatus in a virtual space based on the received information about the positions and postures of the camera and the lighting apparatus. Then, device 310 captures images of a workpiece using the camera and transmits one or more images to device 300. Device 300 analyzes the one or more images and generates evaluation information.

As described above, system 10 is a system for assisting in determining an inspection camera for a workpiece, an inspection lighting apparatus for the workpiece, and an arrangement thereof. System 10 includes storage unit 203 configured to store information about a plurality of cameras and a plurality of lighting apparatuses. System 10 includes input unit 206 configured to receive input of one or more selection criteria about the arrangement. System 10 includes processor 201. Processor 201 is configured to select one or more candidate cameras as candidates for the inspection camera from among the plurality of cameras based on the one or more selection criteria. Processor 201 is also configured to select one or more candidate lighting apparatuses as candidates for the inspection lighting apparatus from among the plurality of lighting apparatuses based on the one or more selection criteria. Processor 201 is also configured to select a camera from among the one or more candidate cameras. Processor 201 is also configured to select a lighting apparatus from among the one or more candidate lighting apparatuses. Processor 201 is also configured to capture images of the workpiece in a virtual space a plurality of times while changing at least a part of a position of the selected camera, a posture of the selected camera, a position of the selected lighting apparatus, and a posture of the selected lighting apparatus. Processor 201 is also configured to analyze the plurality of images obtained by image capturing. Furthermore, processor 201 is configured to output evaluation information for each of a plurality of combinations of the selected camera, the position and posture of the selected camera, the selected lighting apparatus, and the position and posture of the selected lighting apparatus based on an analysis result.

Furthermore, processor 201 is configured to repeatedly perform the capturing images of the workpiece a plurality of times and the analyzing the plurality of images obtained by image capturing for the number of combinations of the one or more candidate cameras and the one or more candidate lighting apparatuses.

### <C. Settings of Camera and Lighting Apparatus>

Next, the one or more selection criteria for selecting the one or more candidate cameras and the one or more candidate lighting apparatuses will be described with reference to Figs. 4 to 9. System 10 can obtain the one or more selection criteria via the screens shown in Figs. 4 to 9. In one aspect, various screens shown in Figs. 4 to 9 can be displayed on output device 217. In this case, system 10 can function as a standalone device. In another aspect, various screens shown in Figs. 4 to 9 can be transmitted to other devices via communication unit 205. In this case, system 10 can function as a system that provides a web application or the like.

Fig. 4 is a diagram showing an example of a series of setting screens for the one or more selection criteria. Screens 410, 420, 430, 440, 450, 460, and 470 can be provided as a UI (User Interface) of an application executed by system 10. System 10 receives input of the one or more selection criteria about the arrangement of the inspection camera and the inspection lighting apparatus via these screens.

In one aspect, screens 410, 420, 430, 440, 450, 460, and 470 may be provided as screens that transition in order. In another aspect, screens 410, 420, 430, 440, 450, 460, and 470 may be provided as one screen.

Screen 410 is a setting screen for a purpose of use or inspection content of a camera and a lighting apparatus. The user can input any purpose of use or inspection content of a camera and a lighting apparatus to system 10 via screen 410. The purpose of use or inspection content of the camera and the lighting apparatus is a part of the one or more selection criteria. The purpose of use or inspection content of the camera and the lighting apparatus can include, for example, "inspection for a scratch on an edge of a workpiece or a metal surface", "inspection of an amorphous workpiece", "inspection for a shape of a workpiece that is not desired to be affected by a surface state of the workpiece", "inspection of a workpiece having a high reflectivity", and the like.

Screen 420 is a setting screen for color and monochrome of a camera. The user can input a setting for color and monochrome of a camera to system 10 via screen 420. The setting for color and monochrome of the camera is a part of the one or more selection criteria. The setting for color and monochrome of the camera can include, for example, "color", "color NIR (near-infrared)", "monochrome", "monochrome NIR", "monochrome SWIR (short-wave infrared)", and the like. Further, the setting for color and monochrome of the camera does not have to be specified.

Screen 430 is a setting screen for environmental resistance. The user can input a setting for environmental resistance of a camera and a lighting apparatus to system 10 via screen 440. The setting for environmental resistance is a part of the one or more selection criteria. The setting for environmental resistance can include, for example, a temperature range, waterproof performance, dustproof performance, impact resistance performance, vibration resistance performance, and the like. Further, the setting for environmental resistance does not have to be specified.

Screen 440 is a setting screen for an image capturing distance (a distance of a camera from a workpiece). The user can input a setting for an image capturing distance to system 10 via screen 440. The setting for the image capturing distance is a part of the one or more selection criteria. The setting for the image capturing distance can, for example, be configured to be settable in units of millimeter or in units of centimeter. Further, the setting for the image capturing distance does not have to be specified.

Screen 450 is a setting screen for a budget for a camera and a lighting apparatus. The user can input a setting for a budget to system 10 via screen 450. The setting for the budget is a part of the one or more selection criteria. The setting for the budget can, for example, be configured to be settable in units of one yen. Further, the setting for the budget does not have to be specified.

Screen 460 is a setting screen for a delivery date of a camera and a lighting apparatus. The user can input a setting for a delivery date to system 10 via screen 460. The setting for the delivery date is a part of the one or more selection criteria. The setting for the delivery date can, for example, be configured to be settable in units of one day. Further, the setting for the delivery date does not have to be specified.

Screen 470 is a setting screen for a shape of a workpiece. The user can input a setting for a shape of a workpiece to system 10 via screen 470. The setting for the shape of the workpiece is a part of the one or more selection criteria. The setting for the shape of the workpiece can, for example, be configured to be settable by loading CAD (Computer Aided Design) data of the workpiece.

In one aspect, system 10 may output only a part of screens 410, 420, 430, 440, 450, 460, and 470. In this case, system 10 obtains, as the one or more selection criteria, items input via the part of the output screens.

In another aspect, system 10 can provide any setting screen about a camera and a lighting apparatus other than the screens shown in Fig. 4. Further, system 10 can obtain any setting as a part of the one or more selection criteria via any setting screen. As an example, a setting screen for the number of pixels of a camera can be provided as a UI of an application executed by system 10. As another example, a setting screen for a type of a lighting apparatus (a ring lighting apparatus, etc.) can be provided as a UI of an application executed by system 10.

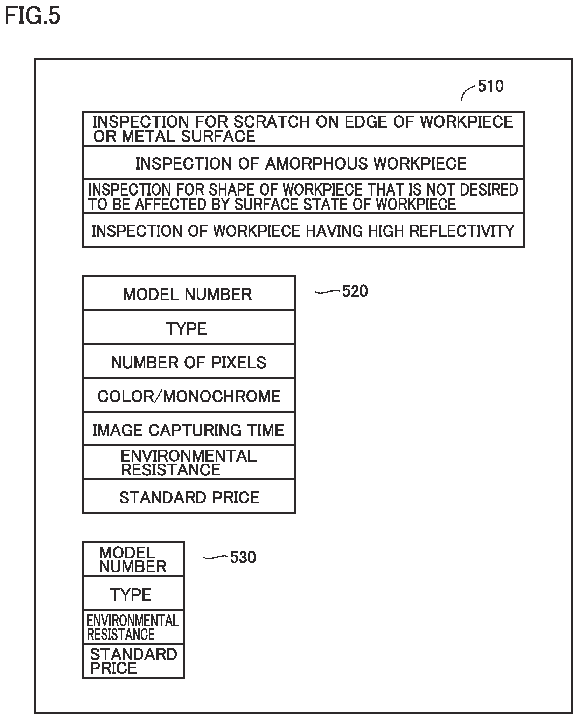

Fig. 5 is a diagram showing an example of setting items for the camera and the lighting apparatus that can be set on each screen shown in Fig. 4. A setting item 510 is an item common to the camera and the lighting apparatus. Setting item 510 includes, for example, various purposes of use (inspection contents). A setting item 520 is an item for the camera. Setting item 520 can include, for example, a model number, a type, the number of pixels, color/monochrome, an image capturing time, environmental resistance, a price, and the like. A setting item 530 is an item for the lighting apparatus. Setting item 530 can include, for example, a model number, a type, environmental resistance, a price, and the like.

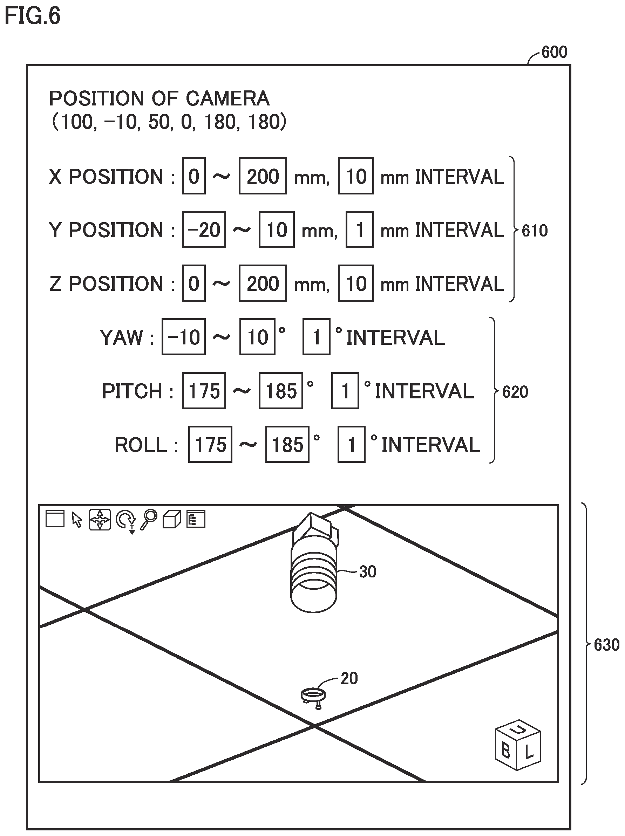

Fig. 6 is a diagram showing an example of a setting screen for a position and a posture of the camera. A screen 600 can be provided as a UI of an application executed by system 10. Screen 600 is a setting screen for a position and a posture of the camera. The user can input settings for a range of the position of the camera and a range of the posture of the camera to system 10 via screen 600. The settings for the range of the position of the camera and the range of the posture of the camera are a part of the one or more selection criteria. System 10 moves the camera in the virtual space so that the camera is within the range of the position of the camera and the range of the posture of the camera obtained via screen 600. That is, system 10 can limit the setting range of a part or all of the position and posture of the selected camera based on a selection criterion about an inspection camera (the range of the position of the camera and the range of the posture of the camera) included in the one or more selection criteria.

Screen 600 includes an input item 610 for position setting of the camera and an input item 620 for posture setting of the camera. Input item 610 for position setting of the camera includes ranges in X-axis, Y-axis and Z-axis directions and an arrangement interval of the camera. In the example of Fig. 6, the position of the camera is in a range of "0 to 200 mm" in the X-axis direction, and the arrangement interval is "10 mm". Input item 620 for posture setting of the camera includes ranges of angles for yaw, pitch and roll and an arrangement interval of the camera. In the example of Fig. 6, the camera is in a range of "-10 to 10°" in yaw, and the arrangement interval is "1°". Further, screen 600 includes a preview 630 for confirming the input position and posture of the camera. Preview 630 displays the camera and a workpiece in the virtual space. In one aspect, preview 630 may display the input range of the position of the camera and the input range of the posture of the camera. In another aspect, preview 630 may display the camera, the lighting apparatus and the workpiece in the virtual space.

In one aspect, screen 600 may be included in the transition of each screen shown in Fig. 4. Further, in another aspect, screen 600 may be provided as one screen together with screens 410, 420, 430, 440, 450, 460, and 470.

As described above, processor 201 (system 10) can limit the setting range of a part or all of the position and posture of the selected camera based on the selection criterion about the inspection camera (the range of the position of the camera and the range of the posture of the camera) included in the one or more selection criteria.

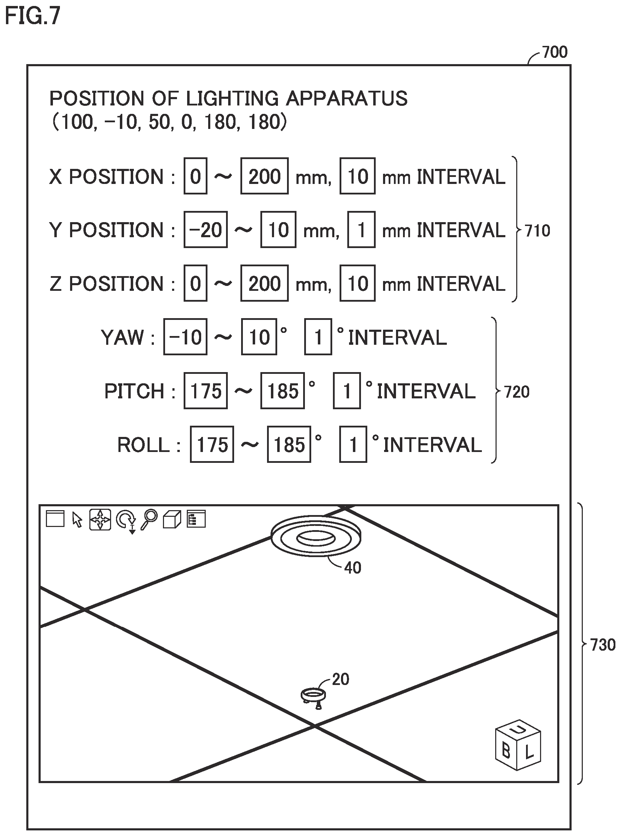

Fig. 7 is a diagram showing an example of a setting screen for a position and a posture of the lighting apparatus. A screen 700 can be provided as a UI of an application executed by system 10. Screen 700 is a setting screen for a position and a posture of the lighting apparatus. The user can input settings for a range of the position of the lighting apparatus and a range of the posture of the lighting apparatus to system 10 via screen 700. The settings for the range of the position of the lighting apparatus and the range of the posture of the lighting apparatus are a part of the one or more selection criteria. System 10 moves the lighting apparatus in the virtual space so that the lighting apparatus is within the range of the position of the lighting apparatus and the range of the posture of the lighting apparatus obtained via screen 700. That is, system 10 can limit the setting range of a part or all of the position and posture of the selected lighting apparatus based on a selection criterion about an inspection lighting apparatus (the range of the position of the lighting apparatus and the range of the posture of the lighting apparatus) included in the one or more selection criteria.

Screen 700 includes an input item 710 for position setting of the lighting apparatus and an input item 720 for posture setting of the lighting apparatus. Input item 710 for position setting of the lighting apparatus includes ranges in X-axis, Y-axis and Z-axis directions and an arrangement interval of the lighting apparatus. In the example of Fig. 7, the position of the lighting apparatus is in a range of "0 to 200 mm" in the X-axis direction, and the arrangement interval is "10 mm". Input item 720 for posture setting of the lighting apparatus includes ranges of angles for yaw, pitch and roll and an arrangement interval of the lighting apparatus. In the example of Fig. 7, the lighting apparatus is in a range of "-10 to 10°" in yaw, and the arrangement interval is "1°". Further, screen 700 includes a preview 730 for confirming the input position and posture of the lighting apparatus. Preview 730 displays the lighting apparatus and a workpiece in the virtual space. In one aspect, preview 730 may display the input range of the position of the lighting apparatus and the input range of the posture of the lighting apparatus. In another aspect, preview 730 may display the camera, the lighting apparatus and the workpiece in the virtual space.

In one aspect, screen 700 may be included in the transition of each screen shown in Fig. 4 together with screen 600. Further, in another aspect, screen 700 may be provided as one screen together with screens 410, 420, 430, 440, 450, 460, 470, and 600.

As described above, processor 201 (system 10) can limit the setting range of a part or all of the position and posture of the selected lighting apparatus based on the selection criterion about the inspection lighting apparatus (the range of the position of the lighting apparatus and the range of the posture of the lighting apparatus) included in the one or more selection criteria.

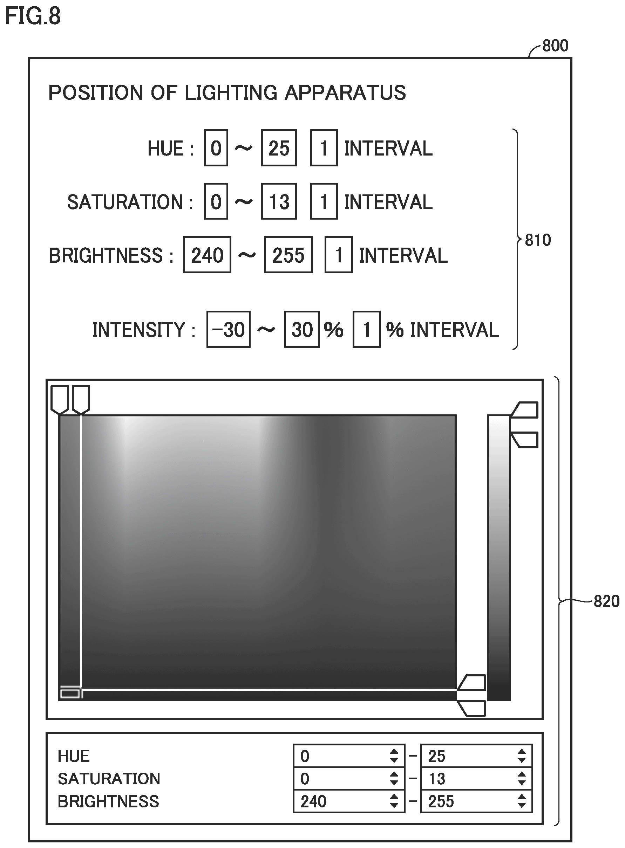

Fig. 8 is a diagram showing an example of a setting screen for other items of the lighting apparatus. A screen 800 can be provided as a UI of an application executed by system 10. Screen 800 is a setting screen for other items of the lighting apparatus. The user can input settings for any other items about the lighting apparatus such as a hue, a saturation, a brightness, and an intensity to system 10 via screen 800. The settings for other items of the lighting apparatus are a part of the one or more selection criteria.

Screen 800 includes input items 810 for the hue, saturation, brightness, and intensity of the lighting apparatus. In one aspect, screen 800 may include graphical input items 820 for the hue, saturation and brightness of the lighting apparatus.

In one aspect, screen 800 may be included in the transition of each screen shown in Fig. 4 together with screens 600 and 700. Further, in another aspect, screen 800 may be provided as one screen together with screens 410, 420, 430, 440, 450, 460, 470, 600, and 700.

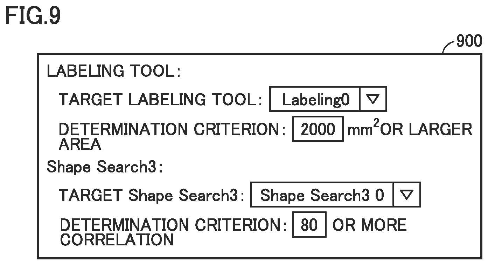

Fig. 9 is a diagram showing an example of a setting screen for the inspection tool. A screen 900 can be provided as a UI of an application executed by system 10. Screen 900 is a setting screen for the inspection tool. The user can input a setting for the tool used for inspection of the image of the workpiece to system 10 via screen 900. The setting for the tool used for inspection of the image of the workpiece is a part of the one or more selection criteria. Screen 900 includes setting items for one or more tools.

In one aspect, screen 900 may be included in the transition of each screen shown in Fig. 4 together with screens 600, 700 and 800. Further, in another aspect, screen 900 may be provided as one screen together with screens 410, 420, 430, 440, 450, 460, 470, 600, 700, and 800.

In one aspect, system 10 may output only a part of screens 410, 420, 430, 440, 450, 460, 470, 600, 700, 800, and 900. In this case, system 10 obtains, as the one or more selection criteria, items input via the part of the output screens.

As described above, the one or more selection criteria include a part or all of the purpose of use of the inspection camera and the inspection lighting apparatus, the environmental resistance setting, the budget, the delivery date, the image capturing time of the inspection camera, the image capturing distance, monochrome/color, the hue, the saturation and the brightness of the inspection lighting apparatus, and the shape information of the workpiece.

As described above, system 10 obtains the one or more selection criteria via the screens shown in Figs. 4 to 9. Further, a plurality of cameras and lighting apparatuses are registered in system 10 in advance. System 10 selects the one or more candidate cameras and the one or more candidate lighting apparatuses from among the plurality of cameras and lighting apparatuses based on the one or more selection criteria. That is, system 10 selects the cameras and the lighting apparatuses that satisfy the one or more selection criteria.

### <D. Selection and Evaluation of Combinations of Camera and Lighting Apparatus>

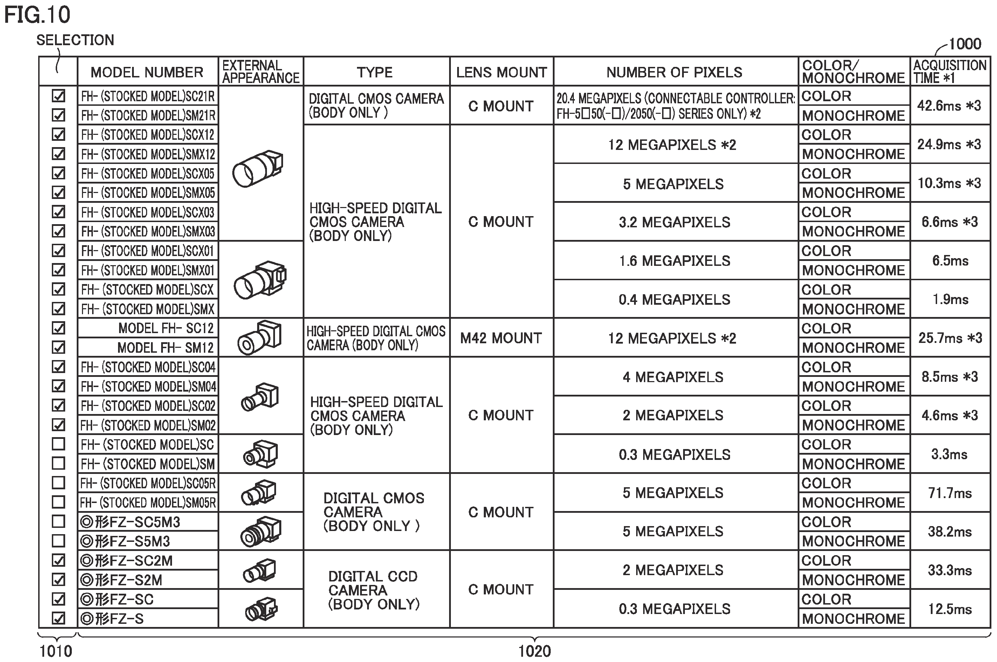

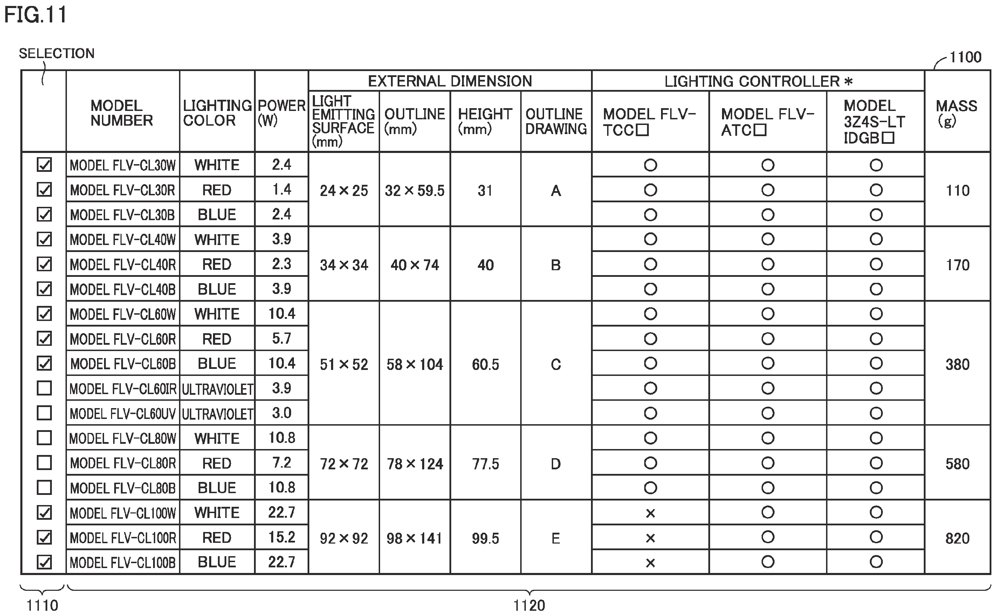

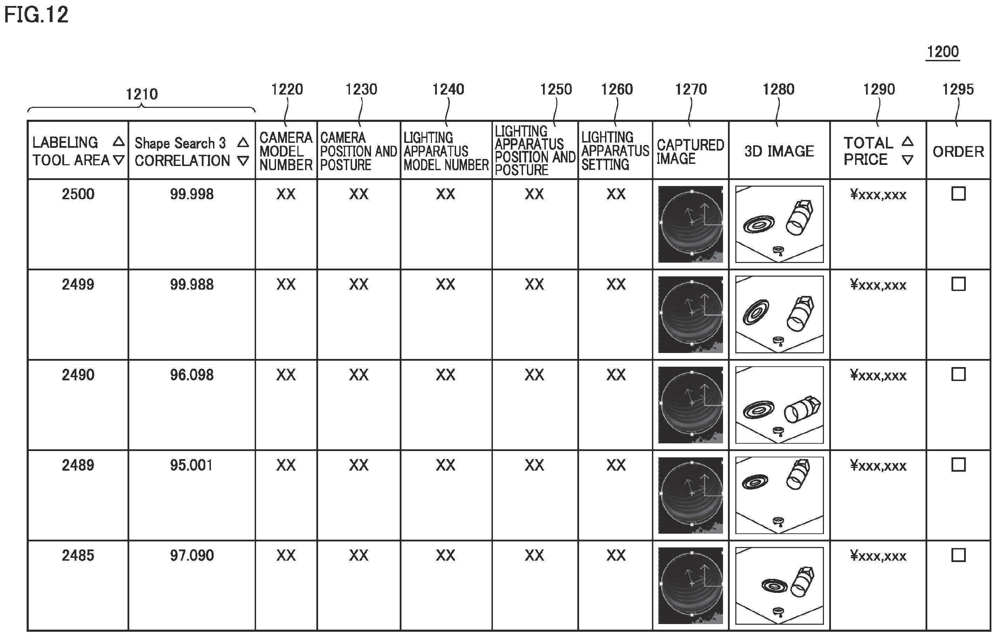

Next, the one or more candidate cameras and the one or more candidate lighting apparatuses selected based on the one or more selection criteria will be described with reference to Figs. 10 and 11. Further, the evaluation information for each image capturing setting will be described with reference to Fig. 12. In one aspect, various screens shown in Figs. 10 to 12 can be displayed on output device 217. In this case, system 10 can function as a standalone device. In another aspect, various screens shown in Figs. 10 to 12 can be transmitted to other devices via communication unit 205. In this case, system 10 can function as a system that provides a web application or the like.

Fig. 10 is a diagram showing an example of a selection screen for the one or more candidate cameras. A screen 1000 can be provided as a UI of an application executed by system 10. Screen 1000 is a selection screen for the one or more candidate cameras. Information about a part or all of the plurality of cameras registered in system 10 is displayed on screen 1000.

Screen 1000 includes a check item 1010 and an item 1020 for specifications of each camera. Check item 1010 indicates whether each camera is selected as the one or more candidate cameras to be evaluated. Item 1020 for specifications of each camera includes any specifications of each camera. The specifications of each camera include any specifications such as a model number, an external appearance (photograph), a camera type, a lens mount type, the number of pixels, color/monochrome, and an acquisition time. In one aspect, item 1020 for specifications of each camera may include other specifications that are not shown in Fig. 10.

Screen 1000 is output after system 10 receives input of the one or more selection criteria. More specifically, system 10 receives input of the one or more selection criteria via the screens shown in Figs. 4 to 9. Next, system 10 determines the one or more candidate cameras based on the one or more selection criteria. Then, system 10 outputs screen 1000. In screen 1000, check item 1010 in a row corresponding to the one or more candidate cameras is checked.

Screen 1000 is configured such that check item 1010 can be edited. The user can decrease the one or more candidate cameras by unchecking check item 1010. Conversely, the user can increase the one or more candidate cameras by checking check item 1010. In one aspect, the user may select the one or more candidate cameras by directly operating screen 1000 without using the screens shown in Figs. 4 to 9. System 10 determines the selection of the one or more candidate cameras when a determination button (not shown) or the like on screen 1000 is pressed.

Fig. 11 is a diagram showing an example of a selection screen for the one or more candidate lighting apparatuses. A screen 1100 can be provided as a UI of an application executed by system 10. Screen 1100 is a selection screen for the one or more candidate lighting apparatuses. Information about a part or all of the plurality of lighting apparatuses registered in system 10 is displayed on screen 1100.

Screen 1100 includes a check item 1110 and an item 1120 for specifications of each lighting apparatus. Check item 1110 indicates whether each lighting apparatus is selected as the one or more candidate lighting apparatuses to be evaluated. Item 1120 for specifications of each lighting apparatus includes any specifications of each lighting apparatus. The specifications of each lighting apparatus include any specifications such as a model number, a lighting color, power, an external dimension, and a type of a lighting controller. In one aspect, item 1120 for specifications of each lighting apparatus may include other specifications that are not shown in Fig. 11.

Screen 1100 is output after system 10 receives input of the one or more selection criteria. More specifically, system 10 receives input of the one or more selection criteria via the screens shown in Figs. 4 to 9. Next, system 10 determines the one or more candidate lighting apparatuses based on the one or more selection criteria. Then, system 10 outputs screen 1100. In screen 1100, check item 1110 in a row corresponding to the one or more candidate lighting apparatuses is checked.

Screen 1100 is configured such that check item 1110 can be edited. The user can decrease the one or more candidate lighting apparatuses by unchecking check item 1110. Conversely, the user can increase the one or more candidate lighting apparatuses by checking check item 1110. In one aspect, the user may select the one or more candidate lighting apparatuses by directly operating screen 1100 without using the screens shown in Figs. 4 to 9. System 10 determines the selection of the one or more candidate lighting apparatuses when a determination button (not shown) or the like on screen 1100 is pressed.

In one aspect, the screens provided by system 10 may transition in the order of the screens in Figs. 4 to 9, screen 1000, and screen 1100. In another aspect, the screens provided by system 10 may transition in the order of the screens in Figs. 4 to 9, screen 1100, and screen 1000. Further, in another aspect, screen 1000 and screen 1100 may be displayed simultaneously.

Fig. 12 is a diagram showing an example of a display screen for evaluation information for each image capturing setting. As described above, system 10 determines a combination of one camera (a camera of a certain model number) selected from the one or more candidate cameras and one lighting apparatus (a lighting apparatus of a certain model number) selected from the one or more candidate lighting apparatuses in a round-robin manner. For each combination of the model number of the camera and the model number of the lighting apparatus, system 10 captures images of the workpiece in the virtual space while changing positions and postures that the camera and the lighting apparatus can take in a round-robin manner. That is, system 10 captures images of the workpiece for each image capturing setting. Then, system 10 analyzes each of the plurality of obtained images using any inspection tool and outputs an evaluation value thereof. Each of the plurality of obtained evaluation values is associated with the image capturing setting, that is, the camera (model number), the position of the camera, the posture of the camera, the lighting apparatus (model number), the position of the lighting apparatus, and the posture of the lighting apparatus.

Hereinafter, for distinction, a value of an analysis result by a tool will be referred to as "evaluation value", and information included in each row of a list displayed on a screen 1200 will be referred to as "evaluation information". "Evaluation information" includes at least an evaluation value, a camera (model number), a position of the camera, a posture of the camera, a lighting apparatus (model number), a position of the lighting apparatus, and a posture of the lighting apparatus. The evaluation information may further include a lighting apparatus setting, a captured image, a 3D image showing an arrangement of the camera and the lighting apparatus, and a total price of the camera and the lighting apparatus.

System 10 displays these pieces of evaluation information on screen 1200. Screen 1200 includes a list of evaluation information. In the example of Fig. 12, screen 1200 includes five pieces of evaluation information (rows). However, this is merely an example, and screen 1200 can include any number of pieces of evaluation information.

Screen 1200 includes, as items, an evaluation value 1210, a camera model number 1220, a camera position and posture 1230, a lighting apparatus model number 1240, a lighting apparatus position and posture 1250, a lighting apparatus setting 1260, a captured image 1270, a 3D image 1280, a total price 1290, and an order check item 1295.

Evaluation value 1210 is an item of an evaluation value by one or more inspection tools. Evaluation value 1210 may include evaluation values by each of a plurality of inspection tools. The evaluation information (rows of screen 1200) can be configured to be sortable by the evaluation values by each of the plurality of inspection tools.

Camera model number 1220 is an item of a model number of a camera. Camera position and posture 1230 is an item of a position and a posture of the camera. The position of the camera includes values of coordinates of the camera in the virtual space. The posture of the camera includes values of yaw, pitch and roll of the camera.

Lighting apparatus model number 1240 is an item of a model number of a lighting apparatus. Lighting apparatus position and posture 1250 is an item of a position and a posture of the lighting apparatus. The position of the lighting apparatus includes values of coordinates of the lighting apparatus in the virtual space. The posture of the lighting apparatus includes values of yaw, pitch and roll of the lighting apparatus. Lighting apparatus setting 1260 includes any setting of each lighting apparatus (a brightness, which LED to be turned on, etc.). A settable lighting apparatus setting may be different for each model number of the lighting apparatus.

Captured image 1270 is an item of an image of a workpiece captured in the virtual space. 3D image 1280 is an item of an arrangement image of the camera and the lighting apparatus in the virtual space. Total price 1290 is an item of a total price of the camera and the lighting apparatus.

Order check item 1295 is an item for determining whether to order the camera and the lighting apparatus of the model numbers of the corresponding row. System 10 can order the camera and the lighting apparatus of a row in which order check item 1295 is checked from an external shop server. In one aspect, order check item 1295 may be configured such that ordering of the camera and the lighting apparatus can be individually set. Further, order check item 1295 may be configured such that the number of orders of the camera and the lighting apparatus can be set. Further, order check item 1295 may be configured such that the number of orders of the camera and the lighting apparatus can be individually set. System 10 can transmit order information (model numbers of one or more products, the number of orders, etc.) to the shop server based on the input content of order check item 1295.

By referring to screen 1200, the user can easily grasp a combination of a model number of a camera, a position and a posture of the camera, a model number of a lighting apparatus, and a position and a posture of the lighting apparatus with a high evaluation value (high inspection accuracy). Further, the user can order a camera and a lighting apparatus with a high evaluation value (high inspection accuracy) from a shop via screen 1200. Furthermore, the user can easily design an inspection jig based on the position and posture of the camera and the position and posture of the lighting apparatus with a high evaluation value (high inspection accuracy).

In one aspect, capturing images of the workpiece in the virtual space may include capturing images of each of a plurality of workpieces. As an example, it is assumed that a line under design includes a plurality of inspection jigs. In this case, system 10 takes pictures of each of the plurality of workpieces with the same image capturing setting. The same image capturing setting means the same model number of a camera, the same position and posture of the camera, the same model number of a lighting apparatus, and the same position and posture of the lighting apparatus. Then, system 10 outputs evaluation values of the captured images of the plurality of workpieces using an inspection tool. Next, system 10 calculates a comprehensive evaluation value of the captured images of the plurality of workpieces. "Comprehensive evaluation value" may be an average value, a median value, or a summed value of captured images of five workpieces. The comprehensive evaluation value is associated with settings at the time of taking pictures, that is, a camera (model number), a position of the camera, a posture of the camera, a lighting apparatus (model number), a position of the lighting apparatus, and a posture of the lighting apparatus. Finally, system 10 outputs screen 1200 including the comprehensive evaluation value instead of the evaluation values. Each row of screen 1200 in this case can be referred to as "comprehensive evaluation information" for an analysis result of each of the captured images of the plurality of workpieces. Alternatively, the comprehensive evaluation information may be simply referred to as evaluation information.

As described above, the evaluation information includes a model number, a position and a posture of a camera used for capturing images of a workpiece, a model number, a position and a posture of a lighting apparatus used for capturing images of the workpiece, an evaluation value of an analysis result, and the captured images.

As described above, capturing images of the workpiece in the virtual space may include capturing images of each of a plurality of workpieces. In this case, the evaluation information includes comprehensive evaluation information when the images of each of the plurality of workpieces are captured, for each of the plurality of combinations of the selected camera, the position and posture of the selected camera, the selected lighting apparatus, and the position and posture of the selected lighting apparatus.

As described above, system 10 includes communication unit 205 that communicates with the shop server. Input unit 206 receives, from the user, input of order information of at least one of the camera and the lighting apparatus included in the evaluation information. Communication unit 205 transmits the order information to the shop server based on the input of the order information. In one aspect, communication unit 205 may transmit the order information to an e-mail address of a shop or the like.

### <E. Process Procedure of System>

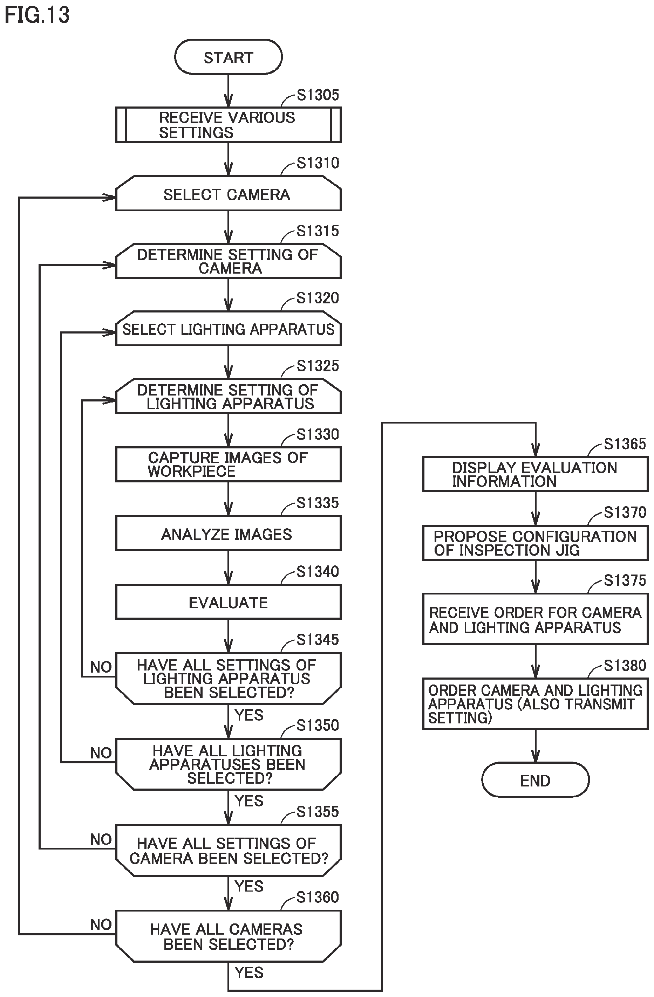

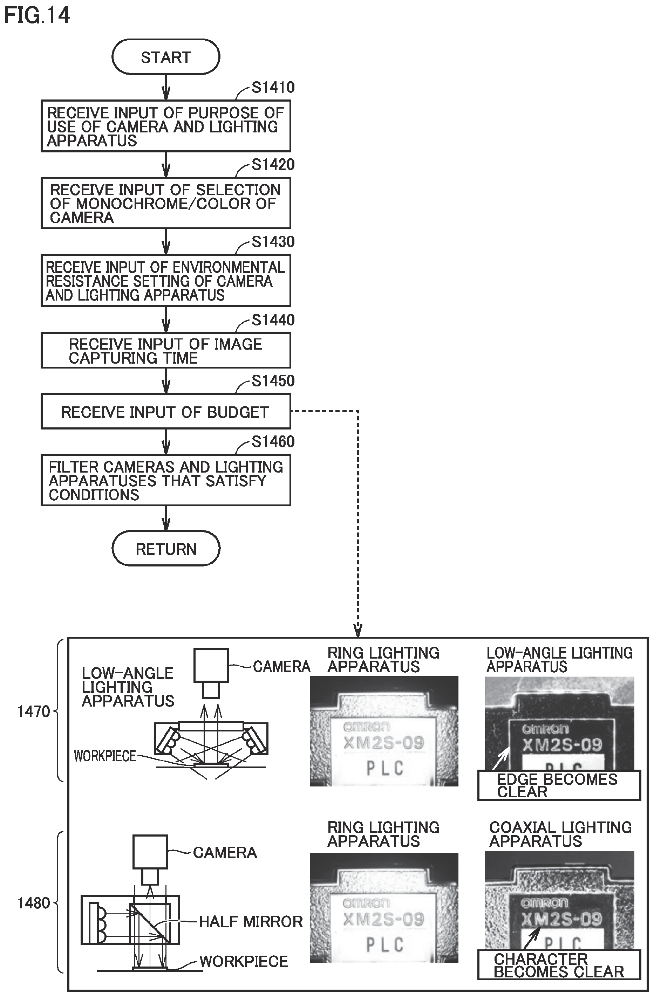

Next, a process procedure from when system 10 receives the input of the one or more selection criteria to when system 10 outputs the evaluation information will be described with reference to Figs. 13 and 14. In one aspect, processor 201 may load a program for performing a process in Figs. 13 and 14 from storage unit 203 into RAM 202 and execute the program. In another aspect, a part or all of the process may also be implemented as a combination of circuit elements configured to perform the process.

Fig. 13 is a diagram showing an example of an overall process procedure of system 10. System 10 can generate evaluation information for each image capturing setting by performing the process in Fig. 13. Further, system 10 can transmit order information to an external shop server based on receiving input of an order for a product from a user.

In step S1305, system 10 receives various settings. The processing in this step corresponds to the processing described with reference to Figs. 4 to 9. Various settings are a part of the one or more selection criteria. In one aspect, system 10 may receive various settings via input device 216. In another aspect, system 10 may receive various settings from another device via communication unit 205.

In step S1310, system 10 selects a camera. More specifically, system 10 selects one or more candidate cameras based on the one or more selection criteria. Furthermore, system 10 selects one camera (model number) from among the one or more candidate cameras.

In step S1315, system 10 determines a setting of the camera selected in step S1310. The setting here is a position and a posture of the camera. When this step is repeatedly performed, system 10 changes at least one of the position and the posture of the camera.

In step S1320, system 10 selects a lighting apparatus. More specifically, system 10 selects one or more candidate lighting apparatuses based on the one or more selection criteria. Furthermore, system 10 selects one lighting apparatus (model number) from among the one or more candidate lighting apparatuses.

In step S1325, system 10 determines a setting of the lighting apparatus selected in step S1320. The setting here is a position and a posture of the lighting apparatus. When this step is repeatedly performed, system 10 changes at least one of the position and the posture of the lighting apparatus. In one aspect, the setting of the lighting apparatus may include a color, a hue and a brightness. In this case, when this step is repeatedly performed, system 10 changes at least one of the position, the posture, the color, the hue, and the brightness of the lighting apparatus.

In step S1330, system 10 captures images of a workpiece. More specifically, system 10 captures images of the workpiece in a virtual space based on the image capturing setting determined by the processing in steps S1310 to S1325.

In step S1335, system 10 analyzes the images. More specifically, system 10 analyzes the images of the workpiece using one or more arbitrary inspection tools.

In step S1340, system 10 evaluates an analysis result. More specifically, system 10 outputs an evaluation value, which is a value of an analysis result by each inspection tool. Further, system 10 generates evaluation information for each image capturing setting by associating the evaluation value with the image capturing setting.

In step S1345, system 10 determines whether all settings of the lighting apparatus have been selected. More specifically, for the lighting apparatus (model number) selected in step S1320, system 10 determines whether evaluation of the captured images of the workpiece has been performed using all combinations of the position and the posture to be verified. When system 10 determines that all settings of the lighting apparatus have been selected (YES in step S1345), system 10 moves the control to step S1350. Otherwise (NO in step S1345), system 10 moves the control to step S1325.

In step S1350, system 10 determines whether all lighting apparatuses have been selected. More specifically, system 10 determines whether evaluation of the captured images of the workpiece has been performed using all of the one or more candidate lighting apparatuses. When system 10 determines that all lighting apparatuses have been selected (YES in step S1350), system 10 moves the control to step S1355. Otherwise (NO in step S1350), system 10 moves the control to step S1320.

In step S1355, system 10 determines whether all settings of the camera have been selected. More specifically, for the camera (model number) selected in step S1315, system 10 determines whether evaluation of the captured images of the workpiece has been performed using all combinations of the position and the posture to be verified. When system 10 determines that all settings of the camera have been selected (YES in step S1355), system 10 moves the control to step S1360. Otherwise (NO in step S1355), system 10 moves the control to step S1315.

In step S1360, system 10 determines whether all cameras have been selected. More specifically, system 10 determines whether evaluation of the captured images of the workpiece has been performed using all of the one or more candidate cameras. When system 10 determines that all cameras have been selected (YES in step S1360), system 10 moves the control to step S1365. Otherwise (NO in step S1360), system 10 moves the control to step S1310.

In step S1365, system 10 displays the evaluation information. The processing in this step corresponds to the processing for outputting screen 1200. In step S1370, system 10 proposes a configuration of an inspection jig. In one aspect, system 10 can propose a configuration of an inspection jig associated with the best evaluation value. In another aspect, system 10 may propose configurations of a plurality of inspection jigs in descending order of evaluation values. The configuration of the inspection jig includes at least a model number of the camera, a position of the camera, a posture of the camera, a model number of the lighting apparatus, a position of the lighting apparatus, and a posture of the lighting apparatus. System 10 does not have to perform the processing in this step (proposal processing).

In step S1375, system 10 receives an order for the camera and the lighting apparatus. As an example, system 10 receives the order for the camera and the lighting apparatus via screen 1200. In one aspect, system 10 may receive an order for only the camera. In another aspect, system 10 may receive an order for only the lighting apparatus.

In step S1380, system 10 orders the camera and the lighting apparatus. More specifically, system 10 transmits order information to the shop server. At that time, system 10 may include a part of the image capturing setting (the positions and postures of the camera and the posture) in the order information. In this case, a seller can print, on a package of the camera or the lighting apparatus, information such as an attachment position of the camera to the jig based on the image capturing setting, for example. An assembler in a line can easily assemble the jig by referring to the information.

Fig. 14 is a diagram showing an example of details of the processing for receiving various settings, which is performed by system 10. The processing in Fig. 14 is performed as internal processing of step S1305. The processing in Fig. 14 corresponds to the input processing on each screen in Fig. 4. In one aspect, system 10 may receive any settings other than steps S1410 to S1450. As an example, system 10 may receive an image capturing distance, a delivery date, a shape of a workpiece, and the like.

Further, system 10 may receive various setting items described with reference to Figs. 7 to 9. In this case, system 10 can narrow the setting range of the position and posture of the camera to be changed in step S1315. Similarly, system 10 can narrow the setting range of the position and posture of the lighting apparatus to be changed in step S1325.

In step S1410, system 10 receives input of a purpose of use (inspection content) of a camera and a lighting apparatus. In step S1420, system 10 receives input of selection of monochrome/color of a camera. In step S1430, system 10 receives input of an environmental resistance setting of a camera and a lighting apparatus. In step S1440, system 10 receives input of an image capturing time. In step S1450, system 10 receives input of a budget. System 10 can propose different configurations of the inspection jig in accordance with the budget. That is, system 10 can select a camera and a lighting apparatus in accordance with the budget. As an example, system 10 can propose a first inspection jig 1470 using a low-angle lighting apparatus, a second inspection jig 1480 using a coaxial lighting apparatus, and the like in accordance with the budget.

In step S1460, system 10 filters cameras and lighting apparatuses that satisfy the conditions. As a result of the processing in this step, system 10 selects one or more candidate cameras from among the plurality of cameras registered in system 10. Similarly, system 10 selects one or more candidate lighting apparatuses from among the plurality of lighting apparatuses registered in system 10.

As described above, by executing a control program, system 10 can perform: receiving input of one or more selection criteria about the arrangement; selecting one or more candidate cameras as candidates for the inspection camera from among a plurality of cameras based on the one or more selection criteria; selecting one or more candidate lighting apparatuses as candidates for the inspection lighting apparatus from among a plurality of lighting apparatuses based on the one or more selection criteria; selecting a camera from among the one or more candidate cameras; selecting a lighting apparatus from among the one or more candidate lighting apparatuses; capturing images of the workpiece in a virtual space a plurality of times while changing at least a part of a position of the selected camera, a posture of the selected camera, a position of the selected lighting apparatus, and a posture of the selected lighting apparatus; analyzing the plurality of images obtained by image capturing; and outputting evaluation information for each of a plurality of combinations of the selected camera, the position and posture of the selected camera, the selected lighting apparatus, and the position and posture of the selected lighting apparatus based on an analysis result.

### <F. Summary>

As described above, for each combination of the model number of the camera and the model number of the lighting apparatus, system 10 captures images of the workpiece in the virtual space while changing the positions and postures that the camera and the lighting apparatus can take in a round-robin manner. That is, system 10 captures images of the workpiece for each image capturing setting. Then, system 10 analyzes each of the plurality of obtained images using any inspection tool and outputs the evaluation value thereof. By using system 10, the user (line designer, etc.) can significantly reduce man-hours required to select a camera and a lighting apparatus and determine positions and postures thereof. That is, the user (line designer, etc.) can significantly reduce design man-hours for an inspection jig. Further, by using system 10, the user (line designer, etc.) can order the selected camera and lighting apparatus.

### <G. Additional Aspects>

As described above, the present embodiment includes the following disclosure.

### [Configuration 1]

A system (10) for assisting in determining an inspection camera for a workpiece, an inspection lighting apparatus for the workpiece, and an arrangement thereof, the system comprising:
a storage unit (203) configured to store information about a plurality of cameras and a plurality of lighting apparatuses;
an input unit (206) configured to receive input of one or more selection criteria about the arrangement; and
a processor (201), wherein
the processor (201) is configured to:
   select one or more candidate cameras as candidates for the inspection camera from among the plurality of cameras based on the one or more selection criteria;
   select one or more candidate lighting apparatuses as candidates for the inspection lighting apparatus from among the plurality of lighting apparatuses based on the one or more selection criteria;
   select a camera from among the one or more candidate cameras;
   select a lighting apparatus from among the one or more candidate lighting apparatuses;
   capture images of the workpiece in a virtual space a plurality of times while changing at least a part of a position of the selected camera, a posture of the selected camera, a position of the selected lighting apparatus, and a posture of the selected lighting apparatus;
   analyze the plurality of images obtained by image capturing; and
   output evaluation information for each of a plurality of combinations of the position and posture of the selected camera and the position and posture of the selected lighting apparatus that are used for capturing images of the workpiece, based on an analysis result.

### [Configuration 2]

The system (10) according to Configuration 1, wherein
the processor (201) is configured to repeatedly perform the capturing images of the workpiece a plurality of times and the analyzing the plurality of images obtained by image capturing for the number of combinations of the one or more candidate cameras and the one or more candidate lighting apparatuses.

### [Configuration 3]

The system (10) according to Configuration 2, wherein
the one or more selection criteria include a part or all of a purpose of use of the inspection camera and the inspection lighting apparatus, an environmental resistance setting, a budget, a delivery date, an image capturing time of the inspection camera, an image capturing distance, monochrome/color, a hue, a saturation and a brightness of the inspection lighting apparatus, and shape information of the workpiece.

### [Configuration 4]

The system (10) according to Configuration 3, wherein
the processor (201) is configured to limit a setting range of a part of the position and posture of the selected camera based on a selection criterion about the inspection camera included in the one or more selection criteria.

### [Configuration 5]

The system (10) according to Configuration 3, wherein
the processor (201) is configured to limit a setting range of a part of the position and posture of the selected lighting apparatus based on a selection criterion about the inspection lighting apparatus included in the one or more selection criteria.

### [Configuration 6]

The system (10) according to any one of Configurations 1 to 5, wherein
the evaluation information includes a model number, a position and a posture of a camera used for capturing images of the workpiece, a model number, a position and a posture of a lighting apparatus used for capturing images of the workpiece, an evaluation value of the analysis result, and the captured images.

### [Configuration 7]

The system (10) according to any one of Configurations 1 to 5, wherein
the capturing images of the workpiece in a virtual space includes capturing images of each of a plurality of workpieces, and
the evaluation information includes comprehensive evaluation information when the images of each of the plurality of workpieces are captured, for each of the combinations of the position and posture of the selected camera and the position and posture of the selected lighting apparatus.

### [Configuration 8]

The system (10) according to any one of Configurations 1 to 5, further comprising a communication unit (205) configured to communicate with a shop server, wherein
the input unit (206) is configured to receive, from a user, input of order information of at least one of the camera and the lighting apparatus included in the evaluation information, and
the communication unit (205) is configured to transmit the order information to the shop server based on the input of the order information.

### [Configuration 9]

A control method for a system (10) for assisting in determining an inspection camera for a workpiece, an inspection lighting apparatus for the workpiece, and an arrangement thereof, the control method comprising:
receiving input of one or more selection criteria about the arrangement;
selecting one or more candidate cameras as candidates for the inspection camera from among a plurality of cameras based on the one or more selection criteria;
selecting one or more candidate lighting apparatuses as candidates for the inspection lighting apparatus from among a plurality of lighting apparatuses based on the one or more selection criteria;
selecting a camera from among the one or more candidate cameras;
selecting a lighting apparatus from among the one or more candidate lighting apparatuses;
capturing images of the workpiece in a virtual space a plurality of times while changing at least a part of a position of the selected camera, a posture of the selected camera, a position of the selected lighting apparatus, and a posture of the selected lighting apparatus;
analyzing the plurality of images obtained by image capturing; and
outputting evaluation information for each of a plurality of combinations of the position and posture of the selected camera and the position and posture of the selected lighting apparatus that are used for capturing images of the workpiece, based on an analysis result.

### [Configuration 10]

A control program for a system (10) for assisting in determining an inspection camera for a workpiece, an inspection lighting apparatus for the workpiece, and an arrangement thereof, the control program causing the system (10) to perform:
receiving input of one or more selection criteria about the arrangement;
selecting one or more candidate cameras as candidates for the inspection camera from among a plurality of cameras based on the one or more selection criteria;
selecting one or more candidate lighting apparatuses as candidates for the inspection lighting apparatus from among a plurality of lighting apparatuses based on the one or more selection criteria;
selecting a camera from among the one or more candidate cameras;
selecting a lighting apparatus from among the one or more candidate lighting apparatuses;
capturing images of the workpiece in a virtual space a plurality of times while changing at least a part of a position of the selected camera, a posture of the selected camera, a position of the selected lighting apparatus, and a posture of the selected lighting apparatus;
analyzing the plurality of images obtained by image capturing; and
outputting evaluation information for each of a plurality of combinations of the position and posture of the selected camera and the position and posture of the selected lighting apparatus that are used for capturing images of the workpiece, based on an analysis result.

It should be understood that the embodiments disclosed herein are illustrative and non-restrictive in every respect. The scope of the present disclosure is defined by the terms of the claims, rather than the description above, and is intended to include any modifications within the scope and meaning equivalent to the terms of the claims. Further, the disclosures described in the embodiments and modifications are intended to be implemented alone or in combination, wherever possible.

### REFERENCE SIGNS LIST

10 system; 20 workpiece; 30 camera; 40 lighting apparatus; 200, 300, 310 device; 201 processor; 202 RAM; 203 storage unit; 204 external device connection unit; 205 communication unit; 206 input unit; 207 output unit; 208 bus; 216 input device; 217 output device; 220 virtual space generation unit; 230 arrangement unit; 240 image capturing unit; 250 image analysis unit; 260 evaluation unit; 410, 420, 430, 440, 450, 460, 470, 600, 700, 800, 900, 1000, 1100, 1200 screen; 510, 520, 530 setting item; 610, 620, 710, 720, 810, 820 input item; 630, 730 preview; 1010, 1110 check item; 1020, 1120 item; 1210 evaluation value; 1220 camera model number; 1230 position and posture of camera; 1240 lighting apparatus model number; 1250 position and posture of lighting apparatus; 1260 lighting apparatus setting; 1270 captured image; 1280 image; 1290 total price; 1295 order check item; 1470 first inspection jig; 1480 second inspection jig.

## Claims

1. A system for assisting in determining an inspection camera for a workpiece, an inspection lighting apparatus for the workpiece, and an arrangement thereof, the system comprising:
a storage unit configured to store information about a plurality of cameras and a plurality of lighting apparatuses;
an input unit configured to receive input of one or more selection criteria about the arrangement; and
a processor, wherein
the processor is configured to:
select one or more candidate cameras as candidates for the inspection camera from among the plurality of cameras based on the one or more selection criteria;
select one or more candidate lighting apparatuses as candidates for the inspection lighting apparatus from among the plurality of lighting apparatuses based on the one or more selection criteria;
select a camera from among the one or more candidate cameras;
select a lighting apparatus from among the one or more candidate lighting apparatuses;
capture images of the workpiece in a virtual space a plurality of times while changing at least a part of a position of the selected camera, a posture of the selected camera, a position of the selected lighting apparatus, and a posture of the selected lighting apparatus;
analyze the plurality of images obtained by image capturing; and
output evaluation information for each of a plurality of combinations of the selected camera, the position and posture of the selected camera, the selected lighting apparatus, and the position and posture of the selected lighting apparatus based on an analysis result.

2. The system according to claim 1, wherein
the processor is configured to repeatedly perform the capturing images of the workpiece a plurality of times and the analyzing the plurality of images obtained by image capturing for the number of combinations of the one or more candidate cameras and the one or more candidate lighting apparatuses.

3. The system according to claim 2, wherein
the one or more selection criteria include a part or all of a purpose of use of the inspection camera and the inspection lighting apparatus, an environmental resistance setting, a budget, a delivery date, an image capturing time of the inspection camera, an image capturing distance, monochrome/color, a hue, a saturation and a brightness of the inspection lighting apparatus, and shape information of the workpiece.

4. The system according to claim 3, wherein
the processor is configured to limit a setting range of a part of the position and posture of the selected camera based on a selection criterion about the inspection camera included in the one or more selection criteria.

5. The system according to claim 3, wherein
the processor is configured to limit a setting range of a part of the position and posture of the selected lighting apparatus based on a selection criterion about the inspection lighting apparatus included in the one or more selection criteria.

6. The system according to any one of claims 1 to 5, wherein
the evaluation information includes a model number, a position and a posture of a camera used for capturing images of the workpiece, a model number, a position and a posture of a lighting apparatus used for capturing images of the workpiece, an evaluation value of the analysis result, and the captured images.

7. The system according to any one of claims 1 to 5, wherein
the capturing images of the workpiece in a virtual space includes capturing images of each of a plurality of workpieces, and
the evaluation information includes comprehensive evaluation information when the images of each of the plurality of workpieces are captured, for each of the plurality of combinations of the selected camera, the position and posture of the selected camera, the selected lighting apparatus, and the position and posture of the selected lighting apparatus.

8. The system according to any one of claims 1 to 5, further comprising a communication unit configured to communicate with a shop server, wherein
the input unit is configured to receive, from a user, input of order information of at least one of the camera and the lighting apparatus included in the evaluation information, and
the communication unit is configured to transmit the order information to the shop server based on the input of the order information.

9. A control method for a system for assisting in determining an inspection camera for a workpiece, an inspection lighting apparatus for the workpiece, and an arrangement thereof, the control method comprising:
receiving input of one or more selection criteria about the arrangement;
selecting one or more candidate cameras as candidates for the inspection camera from among a plurality of cameras based on the one or more selection criteria;
selecting one or more candidate lighting apparatuses as candidates for the inspection lighting apparatus from among a plurality of lighting apparatuses based on the one or more selection criteria;
selecting a camera from among the one or more candidate cameras;
selecting a lighting apparatus from among the one or more candidate lighting apparatuses;
capturing images of the workpiece in a virtual space a plurality of times while changing at least a part of a position of the selected camera, a posture of the selected camera, a position of the selected lighting apparatus, and a posture of the selected lighting apparatus;
analyzing the plurality of images obtained by image capturing; and
outputting evaluation information for each of a plurality of combinations of the selected camera, the position and posture of the selected camera, the selected lighting apparatus, and the position and posture of the selected lighting apparatus based on an analysis result.

10. A control program for a system for assisting in determining an inspection camera for a workpiece, an inspection lighting apparatus for the workpiece, and an arrangement thereof, the control program causing the system to perform:
receiving input of one or more selection criteria about the arrangement;
selecting one or more candidate cameras as candidates for the inspection camera from among a plurality of cameras based on the one or more selection criteria;
selecting one or more candidate lighting apparatuses as candidates for the inspection lighting apparatus from among a plurality of lighting apparatuses based on the one or more selection criteria;
selecting a camera from among the one or more candidate cameras;
selecting a lighting apparatus from among the one or more candidate lighting apparatuses;
capturing images of the workpiece in a virtual space a plurality of times while changing at least a part of a position of the selected camera, a posture of the selected camera, a position of the selected lighting apparatus, and a posture of the selected lighting apparatus;
analyzing the plurality of images obtained by image capturing; and
outputting evaluation information for each of a plurality of combinations of the selected camera, the position and posture of the selected camera, the selected lighting apparatus, and the position and posture of the selected lighting apparatus based on an analysis result.
